# EUROPEAN PATENT SPECIFICATION

(11) **EP 2 261 147 B1**
(45) Date of publication and mention of the grant of the patent: **26.09.2012**
(21) Application number: 10163409.5
(22) Date of filing: 20.05.2010
(51) Int. Cl.: B65G 49/06

(54) **Apparatus for handling sheets of large dimensions**
Vorrichtung zum Behandeln von großen Glasscheiben
Appareil de manutention de larges feuilles de verre

(30) Priority: 08.06.2009 IT MI20090997
(43) Date of publication of application: 15.12.2010
(73) Proprietor: Officine Mistrello S.r.l., 35040 Ponso (Padova) (IT)
(72) Inventor: Mistrello, Marco, 35040 Ponso (PD) (IT); Aldegheri, Matteo, 35045 Ospedaletto Euganeo (PD) (IT)
(74) Representative: Perani, Aurelio

(56) References cited:
- EP-A1- 1 471 017
- EP-A1- 1 695 928
- EP-A1- 2 070 848
- DE-A1- 19 636 470
- JP-A- 2 225 225
- JP-A- 6 255 772
- JP-A- 7 061 597
- US-A- 5 256 030
- US-A- 5 632 595

## Description

The present invention relates to an apparatus for handling sheets, particularly large flat glass sheets.

Such apparatus may be conveniently employed in industrial warehouses or factories for glass sheet handling, i.e. for loading and/or unloading, selecting and transferring glass sheets from one area to another, as well as for grouping glass sheets in racks.

While glass sheets have varying sizes depending on their expected use, they generally have a standard 6000 x 3210 mm size, with thicknesses in a range from 2 to 22 mm.

As a result of these large sizes, the sheets may have considerable weights. By way of example, a 18 m², 22 mm thick sheet has a weight of about 1 ton. Also, if two or more sheets are joined together by glue (PVB) to form a multi-layer sheet, the sheet weight obviously becomes even larger.

In view of the above, there arises the apparent need to quickly and safely handling said glass sheets, in spite of their large size and weight. Furthermore, the glass sheets have to be handled with the utmost care for preventing their integrity from being affected in any manner.

Considering the above needs, glass sheet handling within industrial warehouses or factories should not be a manual process, and should be carried out using special equipment, and following suitable handling methods whereby the sheets can be picked up from a manufacturing or loading area and transferred to an operating or unloading area and/or vice versa. Particularly, due to the huge weight of glass sheets, such glass sheets need to be handled edgewise, i.e. with a substantially vertical orientation relative to the floor, to prevent deflections of the sheet under its own weight from breaking it.

Typically, the sheets to be picked up are stored edgewise in packs on stands or racks which are slightly inclined to the vertical. Each pack has at least one first sheet providing front access by the handling apparatus that is designed to pick it up.

It is further known to interpose one or more spacers in a sheet pack for spacing and separating two contiguous sheets, or to introduce such spacers to separate two glass sheet packs. Such spacers are associated with the sheets by adhesives and the like by form fit with the edges of the glass sheets, thereby being easily removable from the sheets.

Thus, any time a glass sheet has to be handled, any spacers associated therewith need to be removed. This is needed because the spacers are an obstacle for glass sheet handling, whether the glass sheets are to be transferred to a support means or the glass sheets are to be conveyed to a workstation.

In prior art glass sheet handling apparatus, the presence of spacers between the glass sheets requires the operation of such apparatus to be stopped for an operator to enter the operating area and manually remove the spacers as they appear on the outer side of the glass sheet pack, which cause time waste, and consequent cost increases due to reduced throughput. Furthermore, there are not many opportunities for automation of the glass sheet handling process, because the presence of an operator is always needed.

The provision of sheets having spacer removing means is known in the art, e.g. from US 5.256.030.

In this prior art, the apparatus includes a lattice frame with suction pads mounted thereto to pick up the glass sheet. Furthermore, the frame also has electromagnetic supports mounted thereto, which have electromagnetic windings adapted to be powered to attract the spacers from the glass sheet to be handled. Such spacers extend horizontally all over the extension of the glass sheet.

The electromagnetic supports that form the removal means are located on opposite sides of the frame of the apparatus.

This prior art suffered from a number of drawbacks.

In fact, the removal means might only operate on special ferromagnetic spacers in predetermined positions on the sheet to be handled, particularly arranged all over the sheet. If a different type of spacer is used, which has an unknown position on the sheet, the spacer removing means are totally ineffective.

This prior art machine is poorly adaptable to the various conditions in which the glass sheets are stored in packs, which may include, for instance, vertically arranged elongate cardboard spacers whose position may not always be known beforehand.

Furthermore, the prior art disclosed in US 5.256.030 involves the use of a lattice frame that does not allow handling of glass sheets that require single-face handling, such as low-emissivity glass sheets.

Due to the structure of the suction pad supporting frame, the sheet held by the apparatus must be laid on / transferred to further means for processing/storing the sheet at the face opposite to that held by the suction pads, which prevents the sheet from being always handled on the same side.

EP 2 070 848 discloses an apparatus for handling large glass sheets comprising a plurality of removing means positioned side by side along horizontal lines. The removing means are disposed from the bottom to the top of the pick-up surface of the glass sheet.

JP 02 225225 discloses an apparatus for handling small glass sheets with a sled supported by a frame. The sled has a balancing arm, rotatable around an axis parallel with respect to the floor and which picks up a vertical sheet stocked on stands one-by-one by a first suction cups unit and, contemporaneously, it keeps the spacer which is put on the same sheet by a second suction cups unit.

JP 07 061597 discloses an apparatus for handling small glass sheets comprising a balancing arm rotatable around an axis parallel with respect to the floor with a suction cup unit for picking up a glass sheet vertically stocked on stands. The balancing arm has also an aspirating unit for picking up spacers that is interposed between the sheets.

JP 06 255772 discloses an apparatus for handling small glass sheets comprising a frame with a suction cup holding unit for picking up the sheet and an aspirating unit for picking up the spacers.

A drawback of the above apparatus is that it can remove spacers only if the removing means are positioned exactly in front of the removing means itself. Differently, it is necessary to move the whole frame of the apparatus for intercepting the spacers with, obviously, many risks for the glass sheet.

In view of the above prior art, the object of the present invention is to provide an apparatus that can handle large glass sheets as well as quickly and easily remove any spacer elements between the sheets of a sheet pack, even when these spacers are located in unknown positions on the sheet.

A further object of the invention is to provide an apparatus that can also handle sheets adapted to be handled on one face only, such as low-emissivity glasses.

Another object of the invention is to provide an apparatus that allows reliable, full removal of the spacer element attached to the sheet.

Yet another object of the invention is to provide a sheet handling apparatus that has a simple and inexpensive structure.

According to the present invention, these objects are fulfilled by an apparatus for handling large sheets, adapted to pick up a sheet supported by a support means, the apparatus comprising:
- a frame capable of moving between at least one sheet pick-up position in the proximity of said support means and a position away from the support means,
- sheet pick-up means, comprising a plurality of suction cups defining a pick-up surface whereat the pick-up means may engage with a face of said sheet when the frame is in its pick-up position,
- removing means which are adapted to operate on spacers possibly placed on one face of the sheet to be handled to remove them from the sheet,
said sheet pick-up means and said spacer removing means being supported by said frame of the apparatus,
said removing means extend along a length (L) larger than or equal to the width (d) of said pick-up surface **characterized in that** said removing means extend above said pick-up surface and are arranged over one face of the frame opposite to that with the suction cups thereon.

The features and advantages of the present invention will appear from the following detailed description of two practical embodiments, which are given by way of example and without limitation with reference to the annexed drawings, in which:
- Figure 1 is a front view of an apparatus of the invention, in the proximity of a glass sheet with spacers still thereon,
- Figure 2 is a side view of an apparatus of the invention, in the proximity of a pack of sheets stored on a magazine,

- Figure 3 is a side view of the apparatus, in which the spacer removing means are shown in the rest position,
- Figure 4 is a view like the previous one, where the removing means are moved to proximity with the spacer,
- Figure 5 is a view like the previous one, where the removing means are engaged on the spacer,
- Figure 5a is a view like the previous one, where the spacer is removed from its glass sheet,
- Figure 6 is a side view of a second embodiment of an apparatus of the invention, with the spacer removing means in a rest position,
- Figure 7 is a side view like the previous one, with the spacer removing means in an operating engaged condition on the spacer,
- Figure 8 is a front view of the hooks that form the removing means in the second embodiment of the apparatus, in the rest position,
- Figure 9 is a view like the previous one, with the hooks in the operating engaged condition on the spacer.

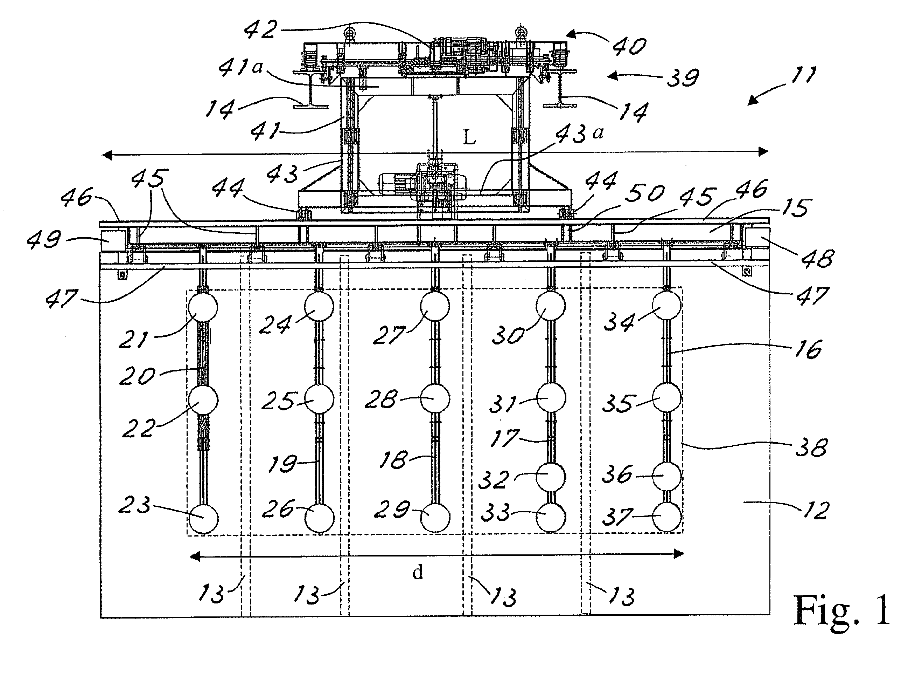

Figure 1 shows an apparatus 11 for handling large sheets, preferably large glass sheets, particularly flat sheets.

As used herein, the term "large glass sheet" is intended to designate a sheet having a surface area of at least 5 square meters.

Glass sheets may be typically stored in packs supported by special support means, before being conveyed to subsequent processing stations (e.g. sheet cutting stations) in an industrial plant.

These support means may include known magazines that are typically used in the field, also known as racks. Nevertheless. the support means might be also embodied by a truck that carries the sheets to the factory.

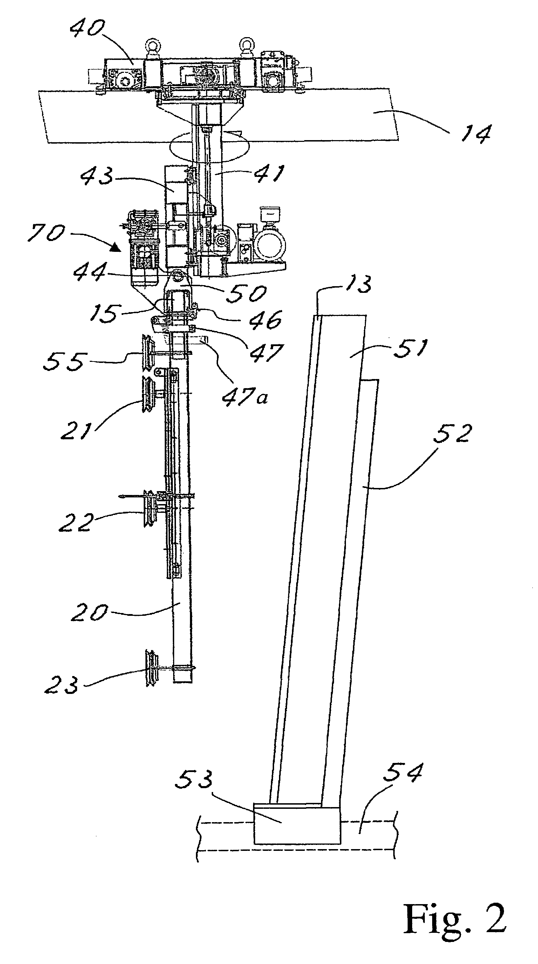

Figure 2 shows a traditional sheet magazine with a back 52 slightly inclined to the vertical and a carriage 53 sliding on rails 54 (indicated by broken lines). These components will not be further described herein, as they are known per se in the art. The pack 51 is supported by the magazine 52-53 and has one or more spacers 13 on the outermost plate to be handled.

The apparatus 11 includes a frame 15-20 movable between a sheet pick-up position in the proximity of the sheet pack supporting means, and a position away from the magazine, e.g. to release the sheet to a subsequent processing station.

The frame 15-20 has pick-up means 21-37, which are adapted to engage with a face of the sheet, when the frame is in the pick-up position in the proximity of the magazine.

The pick-up means include a plurality of suction cups 21-37 defining a pick-up surface 38, whereat the pick-up means may engage with a face of the sheet.

Particularly, the pick-up surface 38 is defined by the envelope of the suction cups 21-37. The pick-up surface 38 has the outermost suction pads 21, 23, 34 and 37 as its apices.

In one embodiment of the invention, the frame 15-20 of the apparatus includes a crossbar 15, which is advantageously substantially horizontal.

Advantageously, the frame 15-20 comprises a plurality of posts 16-20, each having at least one suction cup 21-37.

In one embodiment of the invention, the posts 16-20 extend transversely from the crossbar 15.

Preferably, the posts 16-20 and the crossbar 15 form a comb-like structure, more preferably a downwardly open comb-like structure. This configuration allows the apparatus 11 to cooperate with prior art support devices which have a mating upwardly open comb-like structure, such as a known comb-like tilt table. The intersection of the tilt table and the comb-like frame 15-20 allows the glass sheet to be transferred by always handling it on the same side. This is particularly important when handling glass, e.g. low-emissivity glass sheets, in which one face is required to be unaffected by the sheet handling process.

Preferably, the frame of the apparatus includes five posts. Advantageously, the posts 16-20 are substantially parallel and vertically oriented. Advantageously, each post 16-20 has a plurality of suction cups, preferably from three to five suction cups.

According to the invention, the frame 15-20 also supports spacer removing means 46, 47 that have an extension "L" substantially larger than or equal to the width "d" of the pick-up surface 38 of the apparatus 11. This allows operation of the removing means over a wide area of the glass sheet to be handled, for quick and effective removal of the spacers regardless of their position in the horizontal direction on the sheet.

Figure 1 shows a substantially vertically extending sheet 12 with spacers 13 thereon, in the proximity of the apparatus 11. For example, there may be four spacers 13, but their number and position with respect to the sheet might also be different. The spacers may be for instance made of cardboard and be attached to a face of the sheet 12 by an adhesive.

The frame 15-20 is supported by handling means 39, which are adapted to move it between the pick-up position close to the sheet pack support and a position away from the sheet magazine.

In one embodiment, the handling means 39 include a slide 40 that is slideably mounted to overhead or floor-mounted rails 14.

The apparatus comprises motor means for moving the slide 40, which are formed as is known in the art.

The slide 40 supports an inverted U-shaped subframe 41-41a in such a manner as to rotate it about the axis 42. The subframe 43-43a may slide vertically on the subframe 41-41a. Particularly, the vertical portions 43 of the subframe 43-43a may slide on the vertical portions 41 of the subframe 41-41 a.

This allows vertical motion of the frame 15-20 with the sheet pock-up means thereon.

The crossbar 15 is hinged to the subframe 43-43a with a substantially horizontal hinging arrangement 44. The arms 50 connect the crossbar 15 to the hinging arrangements 44.

In one embodiment, the spacer removing means include two gripping bars 46, 47.

The bars 46, 47 are mutually movable between a rest position in which they are away from each other and an operating position in which they are close to each other to grasp the spacer.

The bars 46, 47 are also movable relative to the frame 15-20 of the apparatus; particularly, in a rest position, they are retracted and close to the crossbar 15, whereas in the operating position they project from the frame 15,. 20 to engage the spacers.

The bars 46, 47 are in substantially horizontal positions relative to the plane of installation of the apparatus. Advantageously, the bars 46, 47 are located in the proximity of the crossbar 15. Motor-driven means 48 and 49 respectively are mounted to the frame 15-20 to move the gripping bars 46 and 47. Preferably, the removing means of the apparatus extend above the pick-up surface 38 of the sheets.

In Figure 2, numeral 70 designates the motor-driven means that allow the frame to rotate about a horizontal axis 44. Figure 2 also shows a possible additional suction cup 55 that may be located in the proximity of the crossbar 15 of the frame.

In Figure 2, the frame 15-20 is rotated to reach the sheet pack on the side opposite to that with the suction cups 21-37.

The spacer removing means are advantageously placed on a face of the frame 15-20 opposite to that with the pick-up means 21-37. However, it shall be noted that, in an alternative embodiment, suction cups might be also present on the side of the frame on which the removing means operate.

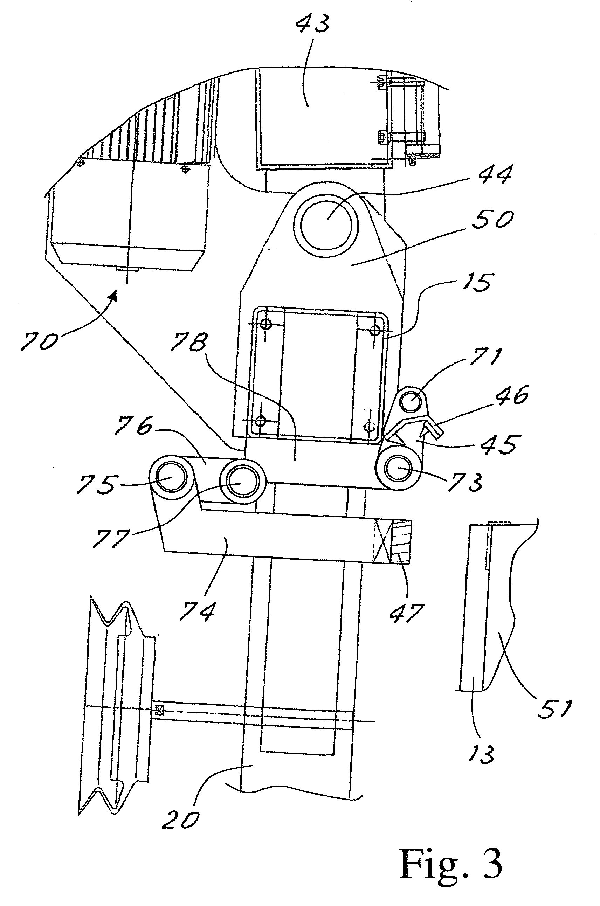

Figures 3 to 6 show four successive positions of the spacer pick-up means.

The crossbar 15 has six supports 78 fixed thereto, which are designed to support the spacer removing means 46, 47.

The upper bar 46 extends all along the crossbar 15 of the frame of the apparatus. The bar 46 is hinged to the arms 45 by hinging arrangements 71 parallel to the crossbar 15. Advantageously, six arms 45 are provided, which are regularly spaced along the crossbar 15.

Each arm 45 is fixed to the rotating drive shaft 73, which is parallel to the crossbar and can be rotatably controlled by suitable motor means. The shaft 73 is mounted to the supports 78 integral with the crossbar 15. The bar 46 substantially has a C shape, with two teeth at two opposite ends.

The lower gripping bar 47 is supported by a plurality of L-shaped arms 74, which are preferably regularly spaced along the extension of the crossbar 15.

Each L-shaped arm supports the gripping bar 47 at a front end and is hinged to the lever 76 at an opposite rear end, by means a hinging arrangement 75 parallel to the crossbar 15. The lever 76 is fixed to the motor-driven shaft 77, which is supported by the supports 78.

The L-shaped arm 74 is coupled to the frame of the so that its long arm is substantially horizontal as the gripping bar 47 is moved toward the operating engaged position on the spacer 13.

The operation of the removing means will be now described with reference to Figures 3 to 6.

In a first position (Fig. 3), the frame 15-20 of the apparatus is moved to proximity with the glass sheet pack 51, with the last sheet of the pack having one more vertically arranged spacers 13 thereon.

The frame 15-20 is moved toward the sheet pack 51 by its rear face, opposite to that with the suction cups 21-37.

The removing means 46-47 are moved to proximity with the upper end of the pack 51 and the spacers 13.

Advantageously, the apparatus has position sensor means, which detect the position of the sheet pack and the spacers, and allow the handling means 39 to move the frame 15-20 to a proper position in which the removing means 46-47 operate on the sheet pack.

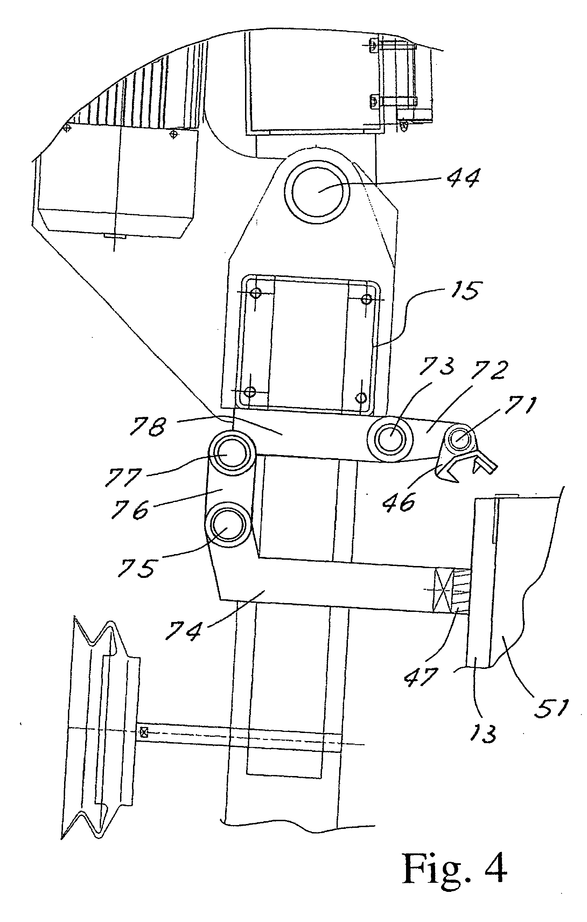

Figure 4 shows a step in which the motor means 48-49 are operated to rotate the shafts 73 and 77, with the gripping bars 46-47 being thus moved toward the position of engagement with the spacer 13. Particularly, the bar 47 is moved to contact with the front surface of the spacer 13, and the upper bar 46 is moved toward the upper end of the spacer 13. The L-shaped arm 74 is held with its long side in a substantially horizontal position.

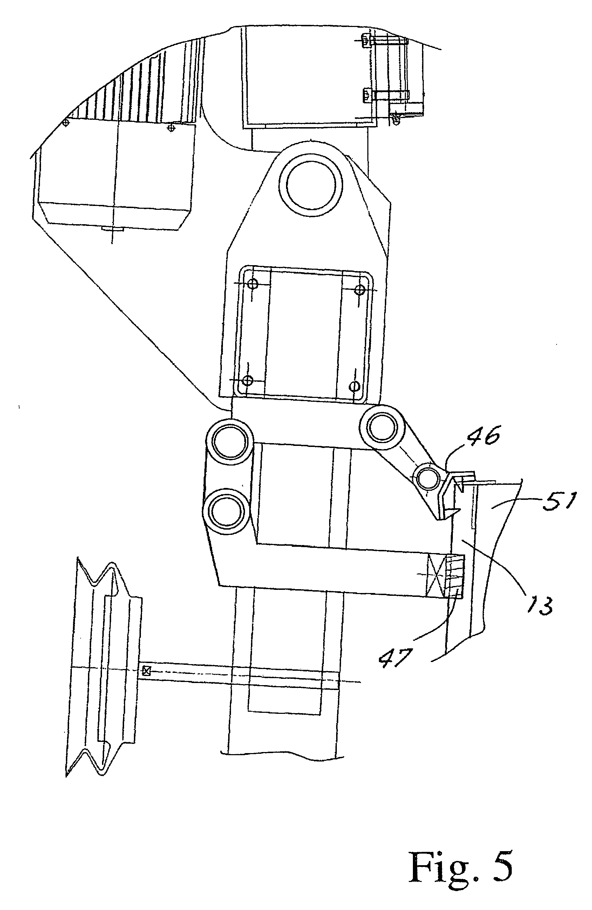

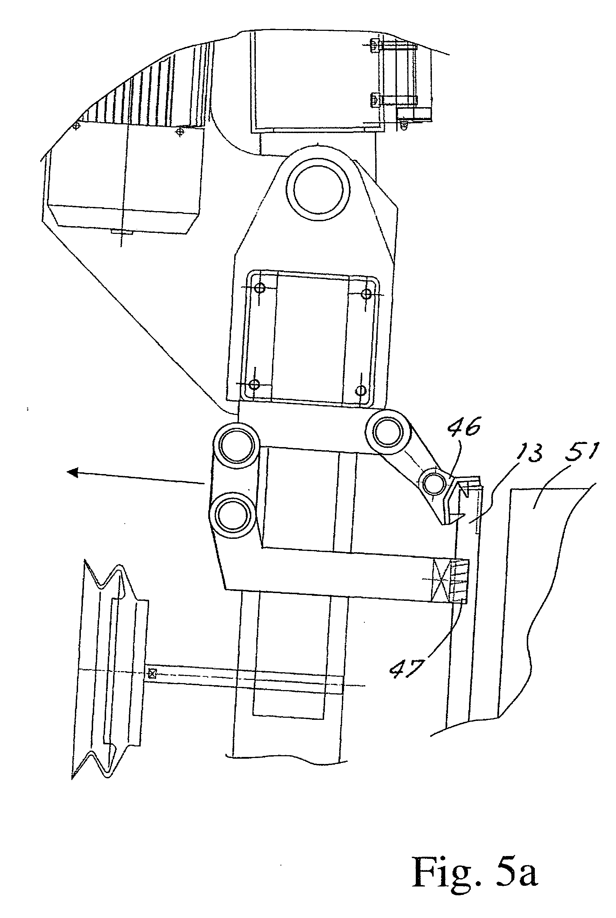

Figure 5 shows the position of engagement of the gripping bars 46 and 47 on the spacer 13. The motor-driven shafts push the bar 47 into the spacer 13. The bar 47 preferably includes a plurality of hooks for perforating the front surface of the cardboard. The spacer is made of cardboard and is designed to be partially perforated by the bar 47. The bar 46 engages the upper end of the spacer 13 by its two teeth, advantageously with one tooth on the upper surface of the spacer and one tooth on the front surface thereof.

Then, the handling means 39 of the apparatus are driven to move the frame 15-20 away from the sheet pack 51, as shown by the arrow of Figure 5a. Hence, the spacer 13 is torn away from the sheet pack, in a direction substantially perpendicular to the plane of the sheet. Alternatively, the removing means might be further rotated by the motor-driven shafts 73, 77 to remove the spacer from the glass sheet.

Advantageously, the removing means 46-47 operate on the upper portion of the spacer 13. It was found that operation on this area of the spacer in a direction orthogonal to the sheet plane causes neat, quick and optimal separation of the spacer from the glass without any rupture.

Once the spacer 13 has been gripped and removed, the removing means 46-47 are opened apart to release the spacers. Then, the removing means are moved into the retracted rest position close to the crossbar 15.

Now, the frame 15-20 may be rotated about the vertical axis 42 to move the suction cups 21-37 facing toward the sheet pack 51. Then, by operating the handling means 39, the frame 15-20 and its suction cups 21-37 are moved to the pick-up position, and engaged by the pick-up surface 38 with a face of the first sheet of the pack 51.

Now, the handling means 39 are actuated to move the sheet held by the suction cups (with no spacers thereon), i.e. to transfer the sheet to a next processing station or another magazine.

In a variant of the first embodiment as described above, the removing means might also include one of the upper 46 and the lower 47 spacer gripping bars.

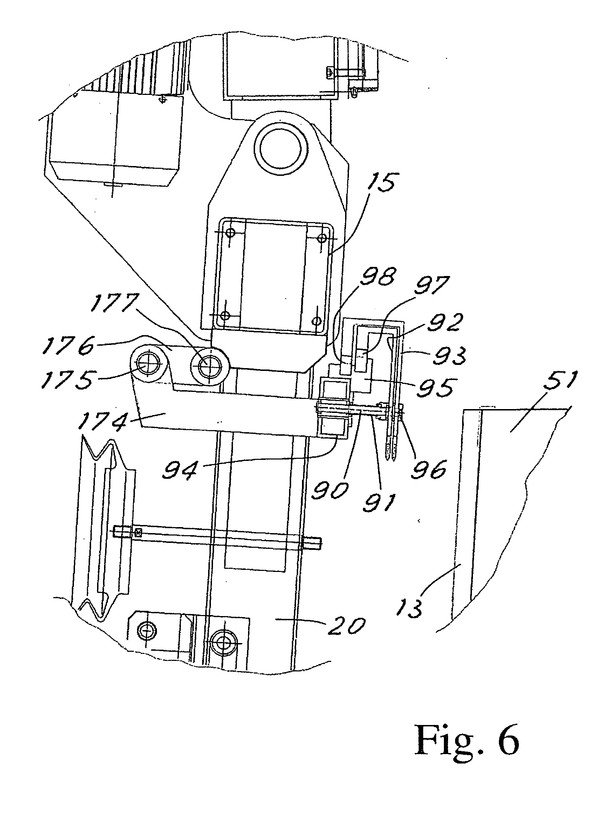

Figures 6 to 9 show an alternative embodiment of the inventive apparatus, which only differs from the first embodiment in the spacer removing means.

According to this variant, the removing means include a bar 94 that extends parallel and proximate to the crossbar 15. The bar 94 supports a plurality of rods 90 arranged orthogonal to the pick-up surface of the apparatus. The rods 90 slide along their axes relative to the bar 94, each one carrying a tracing slider 96 at an outwardly facing front side. The tracing sliders 96 are arranged in adjacent positions in a row, parallel to the bar 94, along an extension substantially equal to or greater than the width of the pick-up surface defined by the pick-up suction cups of the apparatus.

A return spring 91 is coaxially mounted to each rod 90 between the tracing slider 96 and the bar 94, to push the tracing slider outwards away from the bar 94. Two pick-up hooks 92, 93 are mounted to each slider 96, and are designed to rotate in opposite directions to grasp the spacer in an operating position, by a free end. Two rows of hooks 92 and 93 are thus formed, which extend all over the length of the gripping bar 94, which advantageously corresponds to the length of the crossbar 15 of the frame.

Advantageously, each hook 92, 93 has a generally inverted U shape, particularly with one arm shorter than the other. Preferably the longer arm of the U forms the grasping portion of the hook by its free end, whereas the end of the shorter arm is designed to engage with a corresponding hook rotation controlling bar 97, 98.

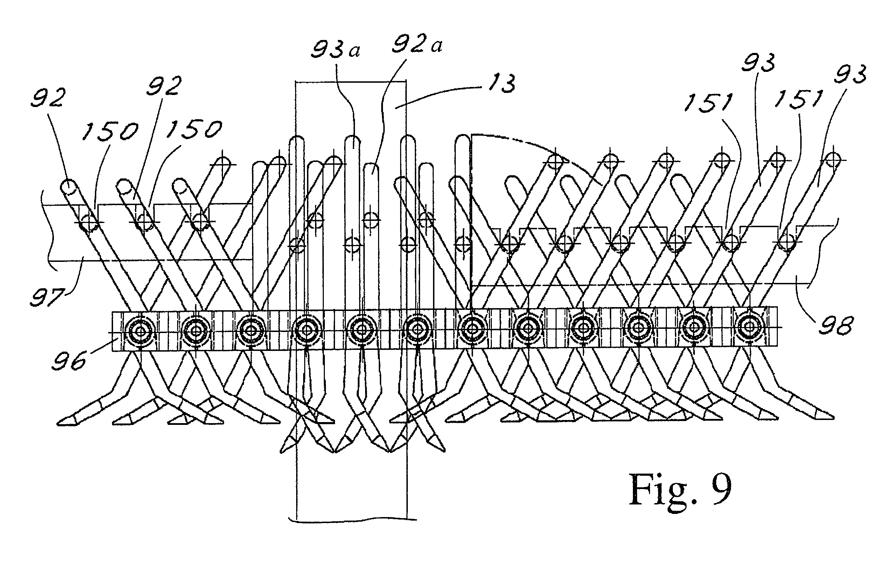

Particularly, the right hooks 92 have a rear end engaging in corresponding slots 150 formed on the control bar 97, whereas the left hooks 93 have the rear end engaging in slots 151 of the control bar 98 (Fig. 9).

The control bars 97 and 98 extend parallel to the crossbar 15 all over its length, and are able to axially slide along a guide 95 integral with the bar 94. By causing the bars 97, 98 to slide in opposite directions by appropriate actuator means (not shown), the hooks 92, 93 are rotated in opposite directions to grasp the spacers 13.

The bar 94 is movable between a retracted rest position in the proximity of the frame 15-20 of the apparatus (and particularly the crossbar 15) and a forward position away from the frame of the apparatus for engagement with the spacers 13 of a sheet.

For this purpose, the bar 94 is mounted to the front end of a L-shaped arm 174, which is mounted and driven relative to the frame of the apparatus exactly like the arm 74 of the first embodiment.

The operation of the pick-up means of the second embodiment will be now described.

Figure 6 shows the spacer removing means in the rest position, proximate to a sheet pack 51 that has a spacer 13 on the outermost sheet of the pack.

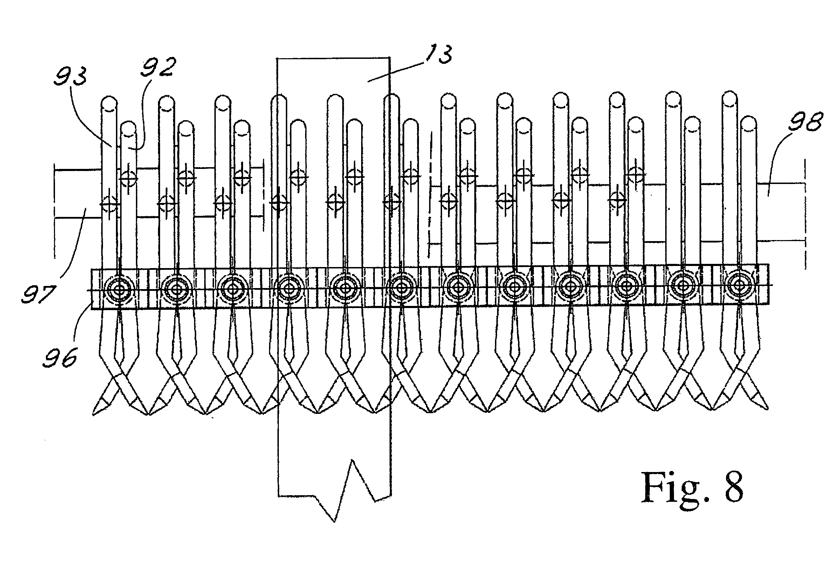

The bar 94 is in the rest position in the proximity of the crossbar 15. The hooks 92, 93 are vertically oriented in the rest position as shown in Figure 8. The tracing sliders 96 are in the forwardmost position, outwardly biased by the spring 91.

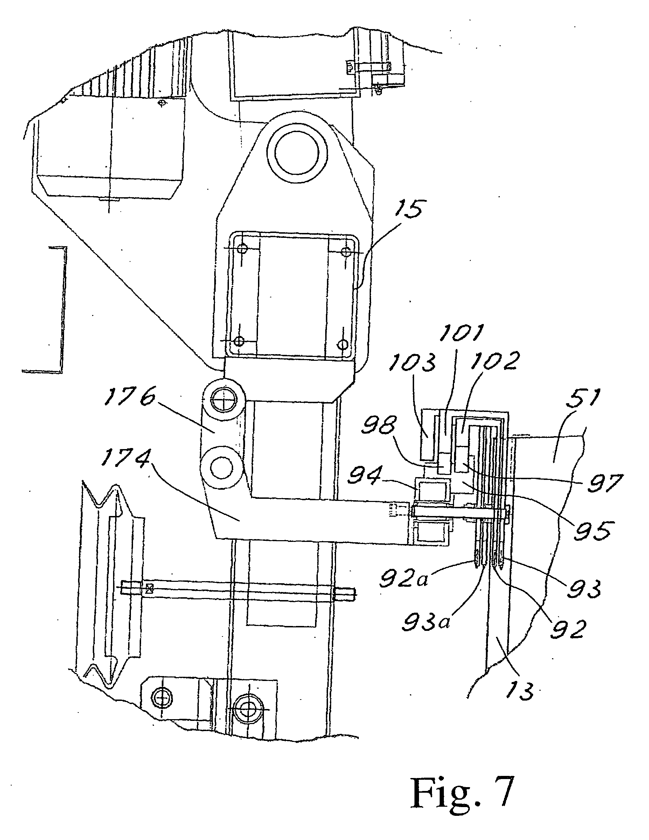

Figure 7 shows the position in which the gripping bar 94 is in the operating position close to the spacer, and is moved by actuating the arm 174 and its motor-driven mechanism 175-177.

The tracing sliders 96 at the spacer 13 are pushed toward the frame 15-20, and particularly the gripping bar 94, against the bias of the spring 91, so that the hooks 92a and 93a are also retracted with respect to the other hooks 92, 93 supported by the bar 94. Thus, the rear ends 103 of the hooks 92a, 93a are released from the control bars 97, 98. Conversely, the other hooks 92, 93 adjacent to the spacer 13 are still engaged with their rear portions 101, 102 to the control bars 97, 98 (Fig. 7).

Once this condition has been reached, the bars 97, 98 are actuated to rotate the hooks 92, 93 situated next to the spacer, whereas the hooks 92a, 93a that are mounted to the tracing sliders pushed by the spacer against the spring bias, are unaffected by the movement of the control bars 97, 98 and remain in the vertical position (see Figure 9) or are not operative in the spacer grasping step.

Now, the spacer is gripped between the right hooks and the left hooks next to it, which are moved toward each other by the rotary motion imparted thereto by the control bars 97, 98. Therefore, the frame 15-20 of the apparatus is moved away from the sheet pack 51 in a direction orthogonal to the sheets. Advantageously, the spacers are gripped at their upper end, for quick and effective rupture- and tearing-free separation thereof.

Once the spacer has been torn off the sheet pack, it is released by the removing means, and the control bars 97, 98 are moved back into their starting position. The tracing sliders that had been pushed toward the gripping bar 94 are spring-biased to their starting position and are ready for a next removal operation. Then, the gripping bar 94 is moved back into the rest position proximate to the crossbar 15, whereupon the apparatus may perform the traditional pick-up steps, with the suction cups 21-37 being moved into the pick-up position on the outermost sheet of the pack, according to the procedure described above with reference to the first embodiment.

This embodiment allows the spacers to be picked up in any position along the width of the sheet, because the hooks are seamlessly arranged over a greater width than the pick-up surface of the pick-up means of the apparatus, and particularly over the entire extension of the frame 15-20.

The handling means 39, the suction means associated with the suction cups and the actuators that control the actuation of the spacer removing means are controlled by appropriate control means, e.g. electronic control means. These means are formed in accordance with per se known techniques and will not be further described herein.

The apparatus may also include detection means for detecting the presence of spacers on the outermost sheet of the pack to be handled, to prevent actuation of the removing means if no spacer is present.

Throughout the various embodiments, the spacer removing means seamlessly extend along a length that is about equal to or greater than the width of the pick-up surface of the apparatus. The removing means are adapted for simultaneous operation over their entire length "L" to remove any spacer from a sheet.

The above clearly shows that the objects of the present invention have been fulfilled.

Particularly, this sheet handling apparatus allows quick and reliable removal of spacers. In fact, since the removing means extend over a width equal to or greater than the pick-up surface, they may ensure simultaneous operation over a wide surface of the sheet for removing the spacers.

Furthermore, the removing means can operate all over the width of the pick-up surface and are able to pick up the spacers regardless of their position on the sheet. This affords effective removal with various types of packages.

Also, the apparatus is able to handle glass sheets that require one-side handling, such as low-emissivity glass sheets, as they can cooperate with prior art comb-like tables. This is allowed by the downwardly open comb-like structure of the frame 15-20 that carries the sheet holding suction cups.

Furthermore, removal occurs in an optimal manner, without destroying the spacer or leaving parts of it on the sheet, because the spacers are engaged by the removing means at their upper end, and are separated from the sheet by the application of a force orthogonal to the plane of the sheet.

## Claims

1. Apparatus for handling sheets of large dimension, adapted to pick up a sheet supported by a support means, the apparatus comprising:
- a frame (15-20) capable of moving between at least one sheet pick-up position in the proximity of said support means and a position away from the support means,
- sheet pick-up means (21-37), comprising a plurality of suction cups defining a pick-up surface (38) whereat the pick-up means may engage with a face of said sheet when the frame is in its pick-up position,
- removing means (46, 47, 94) which are adapted to operate on spacers (13) possibly placed on one face of the sheet to be handled to remove them from the sheet, said sheet pick-up means and said spacer removing means being supported by said frame (15-20) of the apparatus,
said removing means (46, 47, 94) extend along a length (L) larger than or equal to the width (d) of said pick-up surface and **characterized in that** said removing means (46, 47, 94) extend above said pick-up surface (38) and are arranged over one face of the frame (15-20) opposite to that with the suction cups (21-37) thereon.

2. An apparatus as claimed in claim 1, **characterized in that** said frame (15-20) comprises a plurality of posts (16-20), each having at least one sheet pick-up suction cup (21, 37).

3. An apparatus as claimed in one or more of the preceding claims, **characterized in that** said posts (16-20) extend from a crossbar (15) of the frame to define a comb structure.

4. An apparatus as claimed in one or more of the preceding claims, **characterized in that** said removing means (46, 47, 94) extend in the vicinity of said crossbar (15) and parallel thereto.

5. An apparatus as claimed in one o more of the preceding claims, **characterized in that** said removing means include two parallel gripping bars (46, 47), moving between a rest position away from each other and a position proximate to each other to grasp one or more spacers (13).

6. An apparatus as claimed in one or more of the preceding claims, **characterized in that** said removing means have two rows of hooks (92, 93) throughout their length (L), whose pick-up portions can move in opposite directions to controllably engage said spacers, said hooks (92, 93) being mounted to tracing sliders (96) that can be retracted as they are pushed against the spacer (13).

7. An apparatus as claimed in one or more of the preceding claims, **characterized in that** the pick-up surface (38) is substantially vertical.

8. An apparatus as claimed in one or more of the preceding claims, **characterized in that** said removing means (46, 47, 94) are designed to move between a retracted rest position proximate to the crossbar (15) and an operating position for engagement with the spacer (13), away from the crossbar (15).

9. An apparatus as claimed in one or more of the preceding claims, **characterized in that** said removing means (46, 47, 94) extend along a length (L) substantially equal to the length of the crossbar (15).

10. A method for handling sheets of large dimension, wherein an apparatus as claimed in any claim from 1 to 9 is employed for removing any spacer from the sheets and for handling sheets of large dimension.

11. A method as claimed in claim 9, wherein the spacer removing means (46, 47, 94) operate at an upper end of the spacers (13).

12. A method as claimed in any claim 10 or 11, wherein the removing means (46, 47, 94) operate on the spacers (13) to remove them in a direction orthogonal to the sheet away therefrom.

## Patentansprüche

1. Vorrichtung zum Handhaben großer Scheiben, die dazu ausgelegt ist, eine durch ein Abstützmittel gestützte Scheibe aufzunehmen, wobei die Vorrichtung umfaßt:
- einen Rahmen (15-20), der geeignet ist, sich zwischen wenigstens einer Scheibenaufnahmeposition in der Nähe des Abstützmittels und einer von dem Abstützmittel entfernt liegenden Position zu bewegen,
- Scheibenaufnahmemittel (21-37), die mehrere Saugnäpfe umfassen, die eine Aufnahmefläche (38) festlegen, an welcher die Aufnahmemittel eine Seitenfläche der Scheibe belegen, wenn der Rahmen sich in seiner Aufnahmeposition befindet,
- Abnahmemittel (46, 47, 94), die dazu ausgelegt sind, auf Abstandshalter (13), die möglicherweise auf einer Seitenfläche der zu handhabenden Scheibe angeordnet sind, einzuwirken, um sie von der Scheibe zu entfernen,
wobei die Scheibenaufnahmemittel und die Abstandshalterabnahmemittel durch den Rahmen (15-20) der Vorrichtung gestützt sind,
wobei die Abnahmemittel (46, 47, 94) sich entlang einer Länge (L) erstrecken, die größer als oder gleich die/der Weite (d) der Aufnahmefläche ist, und
**dadurch gekennzeichnet, daß** die Abnahmemittel (46, 47, 94) sich oberhalb der Aufnahmefläche (38) erstrecken und auf einer Seitenfläche des Rahmens (15-20) angeordnet sind, die gegenüber derjenigen mit den Saugnäpfen (21-37) darauf liegt.

2. Vorrichtung nach Anspruch 1, **dadurch gekennzeichnet, daß** der Rahmen (15-20) mehrere Stützen (16-20) umfaßt, wobei jede wenigstens einen Scheibenaufnahmesaugnapf (21, 37) aufweist.

3. Vorrichtung nach einem oder mehreren der vorhergehenden Ansprüche, **dadurch gekennzeichnet, daß** die Stützen (16-20) sich von einer Querstrebe (15) des Rahmens aus erstrecken, um eine Kammstruktur zu bilden.

4. Vorrichtung nach einem oder mehreren der vorhergehenden Ansprüche, **dadurch gekennzeichnet, daß** sich die Abnahmemittel (46, 47, 94) in der Nachbarschaft der Querstrebe (15) und parallel dazu erstrecken.

5. Vorrichtung nach einem oder mehreren der vorhergehenden Ansprüche, **dadurch gekennzeichnet, daß** die Abnahmemittel zwei parallele Greifstangen (46, 47) umfassen, die sich zwischen einer Ruheposition, in der sie entfernt voneinander sind, und einer Position, in der sie benachbart zueinander sind, bewegen, um einen oder mehrere Abstandshalter (13) zu greifen.

6. Vorrichtung nach einem oder mehreren der vorhergehenden Ansprüche, **dadurch gekennzeichnet, daß** die Abnahmemittel zwei Hakenreihen (92, 93) entlang ihrer ganzen Länge (L) aufweisen, deren Aufnahmeabschnitte sich in entgegengesetzte Richtungen bewegen können, um die Abstandshalter steuerbar zu belegen, wobei die Haken (92, 93) an Tastgleitstücken (96) angebracht sind, die eingefahren werden können, wenn sie gegen den Abstandshalter (13) gedrückt werden.

7. Vorrichtung nach einem oder mehreren der vorhergehenden Ansprüche, **dadurch gekennzeichnet, daß** die Aufnahmefläche (38) im wesentlichen vertikal ist.

8. Vorrichtung nach einem oder mehreren der vorhergehenden Ansprüche, **dadurch gekennzeichnet, daß** die Abnahmemittel (46, 47, 94) dazu ausgelegt sind, sich zwischen einer eingefahrenen Ruheposition in der Nähe der Querstrebe (15) und einer Betriebsstellung zum Belegen des Abstandshalters (13) entfernt von der Querstrebe (15) zu bewegen.

9. Vorrichtung nach einem oder mehreren der vorhergehenden Ansprüchen, **dadurch gekennzeichnet, daß** die Abnahmemittel (46, 47, 94) sich entlang einer Länge (L) erstrecken, die im wesentlichen gleich der Länge der Querstrebe (15) ist.

10. Verfahren zum Handhaben großer Scheiben, wobei eine Vorrichtung nach einem der Ansprüche 1 bis 9 zum Abnehmen jedes Abstandshalters von den Scheiben und zum Handhaben großer Scheiben verwendet wird.

11. Verfahren nach Anspruch 10, wobei die Abstandshalterabnahmemittel (46, 47, 94) auf ein oberes Ende der Abstandshalter (13) einwirken.

12. Verfahren nach Anspruch 10 oder 11, wobei die Abnahmemittel (46, 47, 94) auf die Abstandshalter (13) einwirken, um sie in einer Richtung, die senkrecht zu der Scheibe ist, davon zu entfernen.

## Revendications

1. Dispositif de manipulation de vitres de grande dimension, qui est adapté pour prendre une vitre supportée par un moyen de support, ledit dispositif comprenant :
- un châssis (15-20) apte à se déplacer entre au moins une position de prise de vitre à proximité dudit moyen de support et une position éloignée du moyen de support,
- des moyens de prise de vitre (21-37) comprenant une pluralité de ventouses qui définissent une surface de prise (38) sur laquelle lesdits moyens de prise viennent en prise sur une face de la vitre lorsque ledit châssis se trouve dans sa position de prise,
- des moyens d'enlèvement (46, 47, 94) qui sont adaptés pour agir sur des écarteurs (13) disposés éventuellement sur une face de la vitre à manipuler, de manière à enlever ceux-ci de la vitre,
lesdits moyens de prise de vitre et lesdits moyens d'enlèvement des écarteurs étant supportés par ledit châssis (15-20) du dispositif,
lesdits moyens d'enlèvement (46, 47, 94) s'étendant suivant une longueur (L) supérieure ou égale à la largeur (d) de ladite surface de prise, et
**caractérisé par le fait que** lesdits moyens d'enlèvement (46, 47, 94) s'étendent au-dessus de ladite surface de prise (38) et sont disposés sur une face du châssis (15-20) qui est opposée à celle avec les ventouses (21-37) situées là-dessus.

2. Dispositif selon la revendication 1, **caractérisé par le fait que** ledit châssis (15-20) comprend une pluralité de supports (16-20), chacun ayant au moins une ventouse (21, 37) de prise de vitre.

3. Dispositif selon l'une ou plusieurs des revendications précédentes, **caractérisé par le fait que** lesdits supports (16-20) s'étendent à partir d'une barre transversale (15) du châssis de manière à définir une structure de peigne.

4. Dispositif selon l'une ou plusieurs des revendications précédentes, **caractérisé par le fait que** lesdits moyens d'enlèvement (46, 47, 94) s'étendent au voisinage de ladite barre transversale (15) et parallèlement à celle-ci.

5. Dispositif selon l'une ou plusieurs des revendications précédentes, **caractérisé par le fait que** lesdits moyens d'enlèvement comprennent deux barres de préhension (46, 47) parallèles se déplaçant entre une position de repos dans laquelle elles sont espacées l'une de l'autre et une position dans laquelle elles sont proches l'une de l'autre de manière à saisir un ou plusieurs écarteurs (13).

6. Dispositif selon l'une ou plusieurs des revendications précédentes, **caractérisé par le fait que** lesdits moyens d'enlèvement présentent deux rangées de crochets (92, 93) suivant toute leur longueur (L) dont les portions de prise peuvent se déplacer dans des directions opposées pour venir en prise d'une manière contrôlable sur lesdits écarteurs, les crochets (92, 93) étant montés sur des coulisseaux de palpage (96) qui peuvent être rentrés lorsqu'ils sont poussés contre l'écarteur (13).

7. Dispositif selon l'une ou plusieurs des revendications précédentes, **caractérisé par le fait que** la surface de prise (38) est pour l'essentiel verticale.

8. Dispositif selon l'une ou plusieurs des revendications précédentes, **caractérisé par le fait que** lesdits moyens d'enlèvement (46, 47, 94) sont conçus pour se déplacer entre une position rentrée de repos à proximité de ladite barre transversale (15) et une position opérationnelle éloignée de la barre transversale (15), pour être en prise sur l'écarteur (13).

9. Dispositif selon l'une ou plusieurs des revendications précédentes, **caractérisé par le fait que** lesdits moyens d'enlèvement (46, 47, 94) s'étendent suivant une longueur (L) qui est pour l'essentiel égale à la longueur de ladite barre transversale (15).

10. Procédé de manipulation de vitres de grande dimension, dans lequel un dispositif selon l'une quelconque des revendications 1 à 9 est mis en ouvre pour enlever tout écarteur des vitres et pour manipuler des vitres de grande dimension.

11. Procédé selon la revendication 10, dans lequel lesdits moyens (46, 47, 94) d'enlèvement des écarteurs agissent sur une extrémité supérieure des écarteurs (13).

12. Procédé selon la revendication 10 ou 11, dans lequel lesdits moyens d'enlèvement (46, 47, 94) agissent sur lesdits écarteurs (13) de manière à les enlever de la vitre dans une direction orthogonale à celle-ci.
